# EUROPÄISCHE PATENTSCHRIFT

(11) **EP 0 740 728 B1**
(45) Veröffentlichungstag und Bekanntmachung des Hinweises auf die Patenterteilung: **10.12.1997**
(21) Anmeldenummer: 95906306.6
(22) Anmeldetag: 05.01.1995
(51) Int. Cl.: E05B 13/10, E05B 37/16, E05B 71/00, B62H 5/06

(54) **SICHERHEITSVERSCHLUSSEINRICHTUNG**
SECURITY LOCK
SYSTEME DE FERMETURE DE SECURITE

(30) Priorität: 21.01.1994 DE 9400978 U
(43) Veröffentlichungstag der Anmeldung: 06.11.1996
(73) Patentinhaber: Altenloh, Brinck & Co. GmbH & Co. KG, D-58256 Ennepetal (DE)
(72) Erfinder: SCHMIDT, Reinhold, D-79227 Mengen (DE)
(74) Vertreter: Zapf, Christoph, Dipl.-Ing.
(86) Internationale Anmeldenummer: EP9500039
(87) Internationale Veröffentlichungsnummer: WO9520086

(56) Entgegenhaltungen:
- EP-A- 0 360 125
- FR-A- 874 061
- US-A- 1 347 708
- US-A- 2 032 821

## Beschreibung

Die vorliegende Erfindung betrifft eine Sicherheitsverschlußeinrichtung, bestehend aus einer Hülse und einem in die Hülse einsetzbaren und mit dieser verbindbaren Verschlußteil, wobei das Verschlußteil mindestens einen mittels einer in dieses einsteckbaren Handhabe verdrehbaren Arretierungsnocken besitzt, der in seiner Schließstellung eine Anlagefläche in der Hülse hintergreift.

Derartige Sicherheitsverschlußeinrichtungen sind bekannt, (z.B. aus US-A-2 032 821 oder EP-A-0 360 125). Hierbei dient als Handhabe zumeist ein Schlüssel. Es hat sich herausgestellt, daß diese bekannten Sicherheitsverschlußeinrichtungen keine große Diebstahlsicherung gewährleisten, da mittels Spezialwerkzeugen oder Nachschlüsseln ein Öffnen relativ leicht möglich ist. Auch ist es bekannt, den Schlüssel-Schließmechanismus durch Zahlenkombinations-Schließeinrichtungen zu ersetzen. Aber auch diese bieten keinen ausreichenden Diebstahlschutz gegen entsprechend ausgebildete Spezialisten.

Der vorliegenden Erfindung liegt die Aufgabe zugrunde, eine Sicherheitsverschlußeinrichtung der bekannten Art zu verbessern, so daß ein quasi absoluter Diebstahlschutz erreicht wird, jedoch mit relativ einfach ausgestalteten Handhaben die Sicherheitsverschlußeinrichtung von dem Besitzer gelöst werden kann, wobei auch durch Gewaltanwendung Dritter kein Lösen möglich ist.

Diese Aufgabe wird gemäß den kennzeichnenden Merkmale des Anspruchs 1 gelöst. Durch die erfindungsgemäße Ausbildung kann insbesondere das Verschlußteil als massives Teil ausgebildet werden, indem lediglich die Bohrungen für die Stifte und eventuell entsprechende Ausnehmungen für die Arretierungsnocken ausgebildet sind. Hierdurch wird ein weitgehender Schutz gegen mechanische Beschädigungen erreicht. Zum Lösen des Verschlußteils muß eine ganz bestimmte Stellung der Arretierungsnocken über die an den Stiften ausgebildete Handhabe eingestellt werden, um die Arretierungsnocken außer Eingriff mit der Anlagefläche zu bringen. Nur in dieser Stellung kann das Verschlußteil innerhalb der Hülse verschoben bzw. aus dieser herausgenommen werden. Da es nahezu beliebige Stellungskombinationen der Arretierungsnocken gibt, ist das Auffinden der Entriegelungsposition praktisch unmöglich. In jeder Stellung der Stifte bzw. der Arretierungsnocken ist das Verschlußteil innerhalb der Hülse drehbar, so daß ein Drehmoment beispielsweise für eine gewaltsame Lösung nicht übertragen werden kann.

Vorteilhafte Ausführungsformen der Erfindung sind in den Unteransprüchen enthalten. Anhand der in den beiliegenden Zeichnungen dargestellten Ausführungsbeispiele wird die Erfindung näher erläutert. Es zeigen:
- Fig. 1: einen Längsschnitt durch eine erfindungsgemäße Sicherheitsverschlußeinrichtung,
- Fig. 2: eine Ansicht auf ein Verschlußteil gemäß dem Pfeil II in Fig. 1,
- Fig. 3: einen Längsschnitt durch eine weitere Ausführungsform einer erfindungsgemäßen Sicherheitsverschlußeinrichtung.

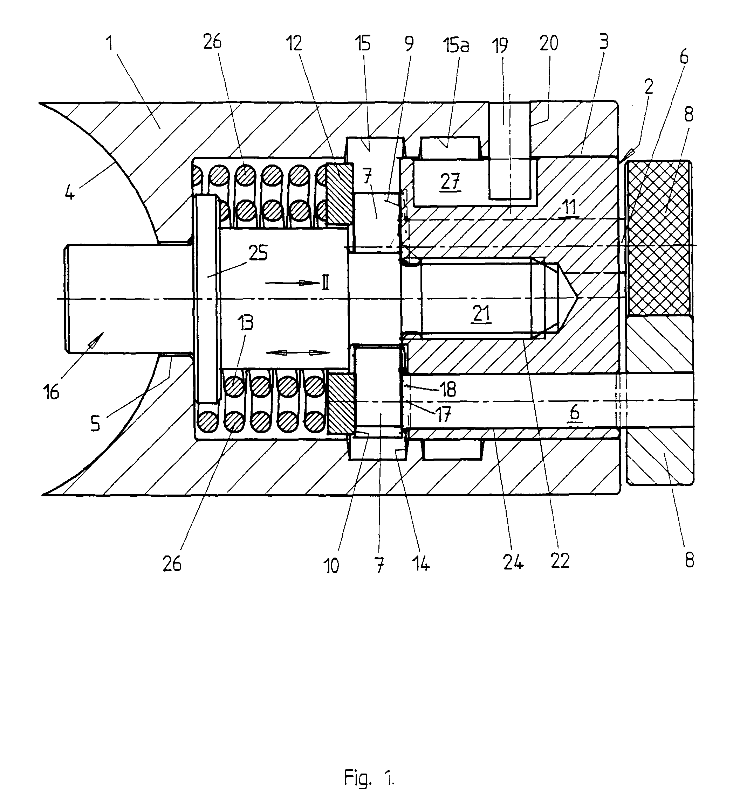

In Fig. 1 ist eine erfindungsgemäße Sicherheitsverschlußeinrichtung dargestellt. Dieser besteht aus einer Hülse 1 und einem in die Hülse 1 einsetzbaren und mit dieser verbindbaren Verschlußteil 2. Die Hülse 1 ist im dargestellten Ausführungsbeispiel im wesentlichen hohlzylindrisch ausgebildet und besitzt an ihrem einen Ende eine Einschuböffnung 3 für das Verschlußteil 2 und an ihrem anderen Ende einen insbesondere konkav ausgebildeten Boden 4 mit einer mittleren Durchgangsöffnung 5. Die dargestellte Sicherheitsverschlußeinrichtung dient z.B. als Sicherheitsschloß für den Lenker eines Fahrrades, indem es seitlich an das die Lenkstange des Fahrradlenkers aufnehmenden Rahmenteil mit der Hülse 1 angeschweißt wird. Die Krümmung des konkaven Bodens 4 ist dabei an den Umfang des die Lenkstange aufnehmenden Rahmenteils angepaßt. Innerhalb des Verschlußteiles 2 sind parallel zu dessen Längsachse X-X mindestens zwei, vorzugsweise drei, drehbar gelagerte Stifte 6 gegeneinander versetzt angeordnet. Vorzugsweise sind die Stifte 6 auf einem Kreis um die Längsachse X-X angeordnet. An den Endbereichen der Stifte 6, die innerhalb des Verschlußteils 2 liegen, sind Arretierungsnocken 7 ausgebildet. Am von außen zugänglichen Ende der Stifte 6 besitzen diese ein Handhabe-Ansatzteil 8. Die Arretierungsnocken 7 sind jeweils zwischen zwei Führungsflächen 9, 10 innerhalb des Verschlußteiles 2 geführt, wobei der Verschlußteil 2 zweiteilig aus einem Führungsteil 11 für die Stifte 6 und einem ringscheibenförmigen Abschlußteil 12 besteht, und jedes der beiden Teile 11, 12 jeweils eine der Führungsflächen 9, 10 aufweist. Im dargestellten Ausführungsbeispiel ist das scheibenförmige Abschlußteil 12 auf seiner der Führungsfläche 10 gegenüberliegenden Seite mit einer Druckfeder 13 beaufschlagt, die sich anderendig an einem Ringbund 25 eines Sicherungsbolzens 16 des Verschlußteiles 2 abstützt. Somit wird das Abschlußteil 12 von der Druckfeder 13 gegen die Arretierungsnocken 7 gedrückt. In der dargestellten Verschlußstellung der erfindungsgemäßen Sicherheitsverschlußeinrichtung können die Arretierungsnocken 7 eine Anlagefläche 14 innerhalb der Hülse 1 bei entspreschender Drehstellung hintergreifen. Diese Anlagefläche 14 wird vorteilhafterweise durch eine Innennut 15 innerhalb der Hülsenwandung der Hülse 1 gebildet. Die Nuthöhe der Innennut 15 ist größer/gleich der Dicke der Arretierungsnocken 7. Vorzugsweise ist die Nuthöhe größer als die Dicke der Arretierungsnocken 7. Die Arretierungsnocken 7 besitzen vorteilhafterweise eine Umfangsform eines unregelmäßigen Vielecks mit kreisbogenförmigen Vieleckseiten. Die Abmessungen der Vieleckseiten sind derart gewählt, daß in einem Drehstellungsbereich der Arretierungsnocken 7 diese die Anlagefläche 14 der Innennut 15 hintergreifen und in dem anderen Drehstellungsbereich die Anlagefläche 14 freigegeben ist.

Wie weiterhin zu erkennen ist, ist in dem Verschlußteil 2 mittig der Sicherungsbolzen 16 z.B. über einen Gewindefortsatz befestigt, der durch die Durchgangsöffnung 5 im Boden 4 verläuft und aus dieser Durchgangsöffnung 5 vorsteht, und zwar in der dargestellten Sicherungsstellung. In dieser Stellung ragt der Sicherungsbolzen 16 im montierten Zustand der erfindungsgemäßen Sicherheitsverschlußeinrichtung in eine Bohrung der Lenkstange, so daß dieser gegenüber dem Rahmenteil nicht mehr verdreht werden kann. Um die Druckfeder 13 herum ist eine weitere Druckfeder 26 angeordnet, die sich einendig am Boden 4 und anderendig an dem Abschlußteil 12 abstützt. Die Federkraft dieser Druckfeder 26 ist schwächer als die der Druckfeder 13, so daß die Druckfeder 13 nicht von der Druckfeder 26 zusammengedrückt werden kann. Die Druckfeder 26 dient dazu, das Verschlußteil 2 aus seiner eingeschobenen Verschlußstellung axial nach außen zu bewegen.

In der Führungsfläche 9, das ist die innenliegende Stirnfläche des Teils 11, sind Rastvertiefungen 17 konzentrisch zur Stiftlängsachse Y-Y angeordnet, wobei in eine der Rastvertiefungen 17 ein Rastmittel 18, das an der jeweils zugekehrten Fläche des Arretierungsnockens 7 ausgebildet ist, eingreifen kann. Im dargestellten Ausführungsbeispiel besteht das Rastmittel 18 aus einem, im Längsschnitt dreieckförmigen Höcker, und die Rastvertiefungen 17, die auf der Führungsfläche 9 ausgebildet sind, besitzen eine an den dreieckförmigen Höcker angepaßte Form. Aufgrund dieser Ausbildung werden die Arretierungsnocken 7 und mit ihnen die im Verschlußteil 2 geführten Stifte 6 beim Verdrehen der Stifte aus der jeweiligen Raststellung, in der der Höcker in eine der Rastvertiefungen 17 eingreift, angehoben, so daß eine eventuell bestehende Anlage der Rastnocken an der Anlagefläche 14 aufgehoben wird.

Innerhalb der Hülse 1 ist in deren Innenwandung ein Anschlagbolzen 19 derart angeordnet, daß er mit seinem inneren Endstück in eine axiale Ausnehmung 27 des Verschlußteils 2 hineinragt. Der Anschlagbolzen 19 wird in eine Bohrung 20 der Hülse 1 eingepreßt, sobald das Verschlußteil 2 in die Hülse 1 eingeschoben worden ist. Der Anschlagbolzen 19 begrenzt den Verschiebeweg des Verschlußteils 2 innerhalb der Hülse 1 zwischen der dargestellten Arretierungsstellung, in der die Arretierungsnocken 7 in die Innennut 15 eingreifen können, und der offenen Stellung des dargestellten Sicherheitsschlosses, wobei dann das Verschlußteil 2 durch die Kraft der Druckfeder 26 gegen den Anschlagbolzen 19 verschoben ist. Wie weiterhin zu erkennen ist, ist das Verschlußteil 2 innerhalb der Hülse 1 derart angeordnet, daß es in der Arretierungsstellung etwa bündig mit der Hülse 1 ist. Das Handhabe-Ansatzteil 8 besteht aus einem Drehrädchen, das von Hand ohne einen speziellen Schlüssel verdreht werden kann.

Die Montage der erfindungsgemäßen Sicherheitsverschlußeinrichtung erfolgt dadurch, daß zunächst in das Führungsteil 11 die Stifte 6 eingeschoben werden, bis die Arretierungsnocken 7 jeweils an der Führungsfläche 9 des Führungsteils 11 anliegen. Danach wird auf dem Sicherungsbolzen 16 die Druckfeder 13 und danach das ringförmige Abschlußteil 12 aufgeschoben und anschließend diese mit seinen endseitigen Gewindezapfen 21 in eine Gewindebohrung 22 des Führungsteils 11 eingeschraubt, so daß die Arretierungsnocken 7 und die Stifte 6 in ihrer Lage gesichert sind und nicht mehr aus dem Führungsteil 11 herausfallen können. Abschließend wird über den Sicherungsbolzen 16 die Druckfeder 26 bis zur Anlage an das Abschlußteil 12 aufgebracht. Die derart vormontierte Einheit wird nunmehr durch die Einschuböffnung 3 in die Hülse 1 eingeschoben, bis die Druckfeder 26 am Boden 4 anliegt. Danach wird in die Bohrung 20 der Anschlagbolzen 19 eingebracht, der verhindert, daß das Verschlußteil 2 aus der Hülse 1 herausbewegt werden kann. Die Druckfeder 26 ist vorzugsweise derart dimensioniert, daß nach der Montage das Verschlußteil 2 durch die Federkraft der Druckfeder 26 gegen den Anschlagbolzen 19 angedrückt wird. Die Länge des Sicherungsbolzens 16 ist derart, daß in der Anlagestelle des Verschlußteils 2 an dem Anschlagbolzen 19 der Sicherungsbolzen 16 nicht über dem Boden 4 vorsteht, sondern sich vorzugsweise mit seinem Ende innerhalb der Durchgangsöffnung 5 befindet. Der Durchmesser der Durchgangsöffnung 5 und der Durchmesser des Sicherungsbolzens 16 sind derart aufeinander abgestimmt, daß zwischen der Wandung der Durchgangsöffnung 5 und dem Umfang des Sicherungsbolzens 16 in der Sicherungsstellung, wie in Fig. 1 gezeigt, nur ein sehr geringes Spiel besteht, so daß bei einem gewaltsamen Verbiegen des Sicherungsbolzens 16 dieser schon bei einer geringsten Auslenkung zu Anlage an den Boden 4 kommt, und somit ein weiterer Verbiegen verhindert wird. Beim Einschieben des Verschlußteils 2 in die Hülse 1 sind die Arretierungsnocken 7 mittels der Stifte 6 derart verdreht angeordnet, daß die Arretierungsnocken 7 nicht über den Umfang des Verschußteils 2 hinausstehen, sondern mit ihrem gesamten Umfangsbereich entweder bündig mit der Umfangsfläche des Verschlußteils 2 sind oder gegenüber dieser zurückspringen. Um die Sicherungsposition einzunehmen, wird das Verschußteil 2 nun von Hand gegen die Federkraft der Druckfeder 26 in die Hülse 1 hineingedrückt, wobei der Verschiebeweg durch den Ringbund 25 derart begrenzt wird, daß in der maximalen inneren Verschiebestellung des Verschlußteils 2 die Arretierungsnocken 7 der Innennut 15 diametral gegenüberliegen. In dieser Stellung können nun die Arretierungsnocken 7 über die Stifte 6 mittels des Handhabe-Ansatzteils 8 derart verdreht werden, daß sie mit einem Umfangsbereich die Anlagefläche 14 hintergreifen, so daß das Verschlußteil 12 in der Hülse 1 arretiert ist und somit auch der Sicherungsbolzen 16 in seiner Sicherungsstellung. Eine axiale Verschiebung des Verschlußteils 2 ist nun nicht mehr möglich. Zum Wiederauffinden der Lösestellung der Arretierungsnocken 7, in der diese innerhalb der Umfangsfläche des Verschlußteils 2 mit ihrem gesamten Nockenbereich liegen, kann eine Kennzeichnung über eine Kodierung vorgesehen sein. Hierzu können zwei Markierungen, und zwar eine auf dem Handhabe-Ansatzteil 8 und eine am Umfang der jeweiligen, den zugeordneten Stift 6 aufnehmenden Bohrungsöffnung der Bohrung 24. Dabei sind die Markierungen derart zueinander und zu der Kontur des zugeordneten Arretierungsnocken 7 angeordnet, daß ausgehend von derjenigen Stellung, in der die beiden Markierungen aufeinanderfallen, ein bestimmter Winkelbereich vorgesehen ist, um den der Stift 6 mit dem Handhabe-Ansatzteil 8 beispielsweise in Uhrzeigerrichtung verdreht werden muß, um die Lösestellung des jeweiligen Arretierungsnockens 7 zu erreichen. Dieser Winkelbereich wird vorzugsweise durch das Abzählen von aufeinanderfolgenden Raststellungen bestimmt. Diese Raststellungen werden durch die im obigen beschriebenen Rastvertiefungen 17 bestimmt, in die jeweils der Höcker eingreift. Vorteilhafterweise sind zehn Rastvertiefungen 17 entsprechend den Zahlen 0 bis 9 vorgesehen. Indem die Markierung auf dem Handhabe-Ansatzteil 8 in bezug auf die Kontur der Umfangsfläche des jeweiligen Arretierungsnockens 7 bei jedem der Stifte 6 unterschiedlich angeordnet wird, und zwar jeweils um das Maß eines Rastschrittes, können beliebige Kodierungen eingestellt werden. Im dargestellten Ausführungsbeispiel sind drei Stifte 6 vorhanden, jedoch liegt es im Rahmen der Erfindung, auch eine größere Anzahl von Stiften 6 mit Arretierungsnocken 7 innerhalb des Verschlußteils 2 anzuordnen. Dies hängt letzlich davon ab, welche gewünschten Kombinationsmöglichkeiten erreicht werden sollen.

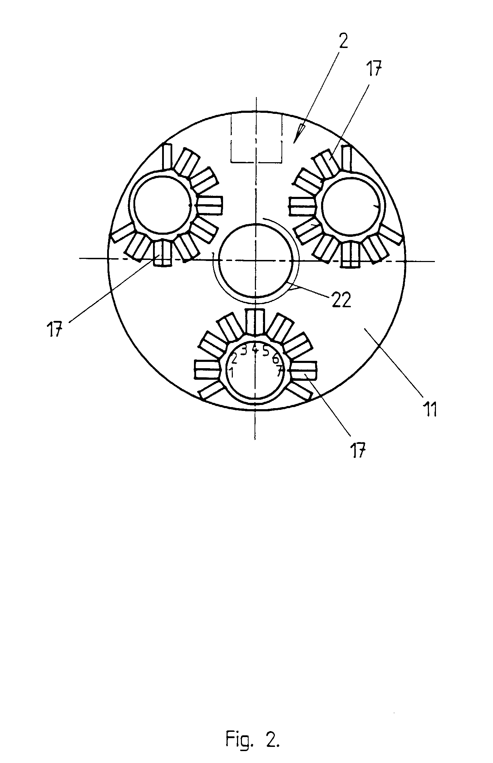

In Fig. 2 ist eine Aufsicht der innenliegenden Stirnfläche des Verschlußteils 2 dargestellt. Hier ist zu erkennen, daß über einen Winkelbereich von ca. 180° konzentrisch um die Öffnung der Bohrung 24 jeweils sieben Rastvertiefungen 17 ausgebildet sind, wobei ein Bereich von ca. 120° ohne Rastvertiefungen 17 vorhanden ist. Diese Ausbildung ermöglicht es, ohne Markierungen die jeweiligen Zahlenkombinationen für die Entriegelungsstellung abzuzählen, denn durch den großen rastfreien Winkelbereich ist es leicht möglich, z.B. bei Drehung im Uhrzeigersinn, die erste und die folgenden Raststellungen zu erkennen.

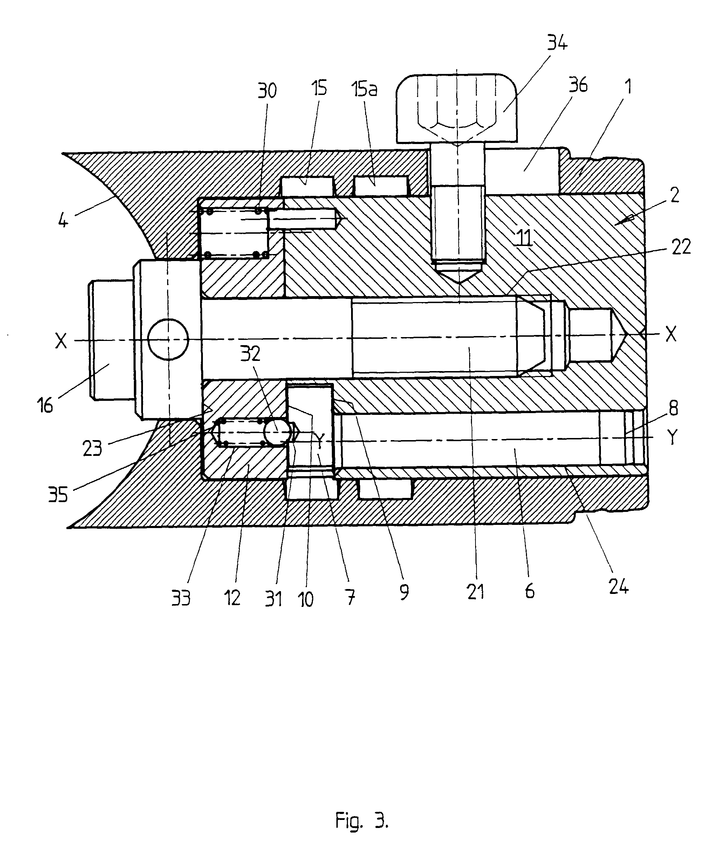

In Fig. 3 ist ein weiteres Ausführungsbeispiel einer erfindungsgemäßen Sicherheitsverschlußeinrichtung dargestellt. Hierbei sind gleiche Teile wie in Fig. 1 mit denselben Bezugsziffern versehen. Der wesentliche Unterschied zu der Ausführungsform gemäß Fig. 1 liegt darin, daß die Arretierungsnocken 7 praktisch axial spielfrei zwischen den Führungsflächen 9, 10 des Führungsteils 11 und des Abschlußteils 12 geführt sind. Hierbei ist auch keine zentrale Druckfeder 13 vorgesehen, sondern lediglich eine exzentrisch am Umfang des Abschlußteils 12 zwischen diesem und dem Boden 4 angeordnete Druckfeder 30. Die einzelnen Raststellungen der Arretierungsnocken 7 werden dadurch erreicht, daß konzentrisch zur Drehachse der Stifte 6 in der dem Abschlußteil 12 zugeordneten Fläche des jeweiligen Arretierungsnockens 7 kalottenförmige Vertiefungen 31 ausgebildet sind, in die eine im Abschlußteil 12 angeordnete Rastkugel 32 einrasten kann, die innerhalb einer Bohrung 33 des Abschlußteils 12 angeordnet ist und mittels einer Druckfeder 35 federbelastet ist, die innerhalb der Bohrung 33 im Abschlußteil 12 liegt. Innerhalb der Hülse 1 sind im dargestellten Ausführungsbeispiel zwei Innennuten 15, 15a ausgebildet, wobei die Innennut 15 der Sicherungsstellung des Verschlußteils 2 entspricht und die Innennut 15a der Lösestellung. In beiden Stellungen, entsprechend den Nuten 15, 15a, kann durch Verdrehung der Arretierungsnocken 7 entweder das Verschlußteil 2 gesichert oder gelöst werden. Zur Verschiebung des Verschlußteils 2 innerhalb der Hülse 1 ist eine Handhabe 34 vorgesehen, die radial aus dem Verschlußteil 2 herausragt und innerhalb eines Langloches 36 in der Hülse 1 verschiebbar ist. Hierbei kann vorgesehen sein, daß das Langloch 36 einen umfangsgemäß verlaufenden Abschnitt aufweist, so daß in der der Löseposition entsprechenden Stellung des Verschlußteils 2 dieses leicht verdreht werden kann, wobei die Handhabe 34 innerhalb des umfangsgemäß verlaufenden Abschnittes das Langloch 36 zu liegen kommt und somit die Lösestellung fixiert wird.

Eine weitere Ausführungsform der erfindungsgemäßen Sicherheitsverschlußeinrichtung kann darin bestehen, daß die Hülse 1 mit einem geschlossenen Boden 4 ausgeführt ist, so daß zwischen dem Verschlußteil 2 und dem Boden 4 ein Aufnahmeraum gebildet wird, in dem Gegenstände gesichert aufbewahrt werden können. In diesem Fall entfällt der Sicherungsbolzen 16, so daß mit der erfindungsgemäßen Sicherheitsverschlußeinrichtung ein Tresor gebildet wird.

Die einzelnen Teile der erfindungsgemäßen Sicherheitsverschlußeinrichtung bestehen aus hochfesten Materialien, z.B. Stahl, die verhindern, daß die erfindungsgemäße Sicherheitsverschlußeinrichtung mittels einfacher Handwerkzeuge zerstört werden kann.

Die Erfindung ist nicht auf die dargestellten Ausführungsbeispiele beschränkt, sondern beinhaltet auch die Kombination der Konstruktionsmerkmale der einzelnen Ausführungsbeispiele. Auch kann die Hülse nicht als separates Bauteil ausgebildet sein, sondern die Wandung des zu sichernden Teiles selber darstellen.

## Patentansprüche

1. Sicherheitsverschlußeinrichtung bestehend aus einer Hülse (1) und einem in die Hülse einsetzbaren und mit dieser verbindbaren Verschlußteil (2), wobei das Verschlußteil mindestens einen mittels einer in dieses einsteckbaren Handhabe (8) verdrehbaren Arretierungsnocken (7) besitzt, der in seiner Schließstellung eine Anlagefläche (14) in der Hülse (1) hintergreift,
**dadurch gekennzeichnet**, daß innerhalb des Verschlußteils (2) parallel zu dessen Längsachse (X-X) mindestens zwei drehbar gelagerte, gegeneinander versetzt angeordnete Stifte (6) verlaufen, an deren in der Hülse (1) liegenden Endbereichen jeweils ein Arretierungsnocken (7) ausgebildet ist, und das obere im Verschlußteil (2) von außen zugängliche Ende der Stifte (6) ein Handhabe-Ansatzteil (8) besitzt, wobei die Arretierungsnocken (7) zwischen zwei Führungsflächen (9, 10) innerhalb des Verschlußteils (2) geführt sind, und das Verschlußteil (2) zweiteilig aus einem Führungsteil (11) für die Stifte (6) und einem Abschlußteil (12) gebildet ist, und jedes der beiden Teile (11, 12) jeweils eine der Führungsflächen (9, 10) aufweist, sowie das Abschlußteil (12) auf seiner der Führungsfläche (10) gegenüberliegenden Seite mit einer Druckfeder (26, 30) beaufschlagt ist, und die Arretierungsnocken (7) die Umfangsform eines unregelmäßigen Vieleckes mit kreisbogenförmigen Vieleckseiten aufweisen, wobei die Abmessungen derart gewählt sind, daß nur in einem Drehstellungsbereich der Arretierungsnocken (7) diese die Anlagefläche (14) der Hülse (1) hintergreifen und in den anderen Drehstellungsbereichen die Arretierungsnocken (7) mit dem Umfang des Verschlußteils (2) bündig verlaufen oder innerhalb des Verschlußteils (2) liegen.

2. Sicherheitsverschlußeinrichtung nach Anspruch 1,
**dadurch gekennzeichnet**, daß das Abschlußteil (12) zwischen den Arretierungsnocken (7) und einer Druckfeder (13) gehalten ist, wobei die Druckfeder (13) sich anderendig an einem Widerlager auf einem Boden (4) des Verschlußteils abstützt, wobei das Widerlager vorzugsweise von einem Ringbund (25) an einem Sicherungsbolzen (16) am Verschlußteil (2) gebildet wird.

3. Sicherheitsverschlußeinrichtung nach Anspruch 1 oder 2,
**dadurch gekennzeichnet**, daß das Abschlußteil (12) zwischen dem Boden (4) der Hülse (1) und den Arretierungsnocken (7) gehalten ist.

4. Sicherheitsverschlußeinrichtung nach einem der Ansprüche 1 bis 3,
**dadurch gekennzeichnet**, daß die Anlagefläche (14) der Hülse (1) durch eine in der Hülsenwandung ausgebildete Innennut (15) gebildet wird, deren Nuthöhe größer/gleich der Dicke der Arretierungsnocken (7) ist.

5. Sicherheitsverschlußeinrichtung nach einem der Ansprüche 1 bis 4,
**dadurch gekennzeichnet**, daß in eine der Führungsflächen (9, 10) zugekehrten Stirnfläche des Verschlußteils (2) Rastvertiefungen (17, 31) konzentrisch zur Längsachse der Stifte (6) angeordnet sind, wobei in eine der Rastvertiefungen (17) in Abhängigkeit von der Drehstellung der Arretierungsnocken (7) jeweils ein feststehendes Rastmittel (18, 32) der zugekehrten Führungsfläche (9, 10) eingreifen kann.

6. Sicherheitsverschlußeinrichtung nach einem der Ansprüche 1 bis 5,
**dadurch gekennzeichnet**, daß die in der Führungsfläche (9, 10) ausgebildeten Rastmittel (18) aus einem im Längsschnitt dreieckförmigen Höcker bestehen und die jeweiligen Rastvertiefungen (17) eine hieran angepaßte Querschnittsform aufweisen.

7. Sicherheitsverschlußeinrichtung nach einem der Ansprüche 1 bis 6,
**dadurch gekennzeichnet**, daß die Rastmittel aus in der Führungsfläche (9, 10) federbelastete Kugeln (32) bestehen, die in kalottenförmig angepaßte Rastvertiefungen (31) in der zugekehrten Stirnfläche eingreifen.

8. Sicherheitsverschlußeinrichtung nach einem der Ansprüche 1 bis 7,
**dadurch gekennzeichnet**, daß in dem Verschlußteil (2) mittig der Sicherungsbolzen (16) befestigt ist, der durch das Verschlußteil (2) und durch eine Durchgangsöffnung (5) im Boden (4) der Hülse (1) verläuft und aus der Durchgangsöffnung (5) in der Sicherungsstellung des Verschlußteils (2) vorsteht.

9. Sicherheitsverschlußeinrichtung nach einem der Ansprüche 1 bis 8,
**dadurch gekennzeichnet**, daß innerhalb der Innenwandung der Hülse (1) eine Umfangsdichtung (19) derart angeordnet ist, daß in jeder Verschiebestellung des Verschlußteils (2) dessen Umfangsabdichtung gewährleistet ist.

10. Sicherheitsverschlußeinrichtung nach einem der Ansprüche 1 bis 9,
**dadurch gekennzeichnet**, daß innerhalb der Innenwandung der Hülse (1) ein in eine radiale Bohrung (20) einsetzbarer, insbesondere einpreßbarer Anschlagbolzen (19) angeordnet ist, der in eine axiale Ausnehmung (27) des Verschlußteils (2) eingreift.

11. Sicherheitsverschlußeinrichtung nach einem der Ansprüche 1 bis 10,
**dadurch gekennzeichnet**, daß die Hülse (1), das Verschlußteil (2) und die Stifte (6) aus hochfesten Materialien, insbesondere Stahl, bestehen.

## Claims

1. A security locking mechanism comprising a casing (1) and a locking portion (2) which can be inserted into and joined to the casing, the locking portion having at least one stopping catch (4) which can be rotated by means of a handle (8) which can be inserted into the said locking portion, which stopping catch, in its locked position, engages behind a bearing face (14) in the casing (1),
characterised in that, inside the locking portion (2) and parallel to the longitudinal axis (X-X) thereof, there extend at least two rotatable pins (6) disposed in a mutually staggered manner, on the end regions of each of which inside the casing (1) a stopping catch (7) is formed, and the upper extremity of the pins (6) which is in the locking portion (2) and accessible from the outside has a handle attachment (8), the stopping catches (7) being guided between two guide faces (9, 10) inside the locking portion (2), and the locking portion (2) is formed in two portions from a guide portion (11) for the pins (6) and a closing portion (12), and each of the two portions (11, 12) has one of the guide faces (9, 10), and the closing portion (12), on the side thereof opposite the guide face (10), is acted upon by a pressure spring (26, 30), and the stopping catches (7) have the peripheral shape of an irregular polygon with circular-arc polygon sides, the dimensions being selected so that only in one rotary position region of the stopping catches (7) do the said catches engage behind the bearing face (14) of the casing (1) and, in the other rotary position regions, the stopping catches (7) extend flush with the periphery of the locking portion (2) or lie inside the locking portion (2).

2. A security locking mechanism according to claim 1,
characterised in that the closing portion (12) is held between the stopping catches (7) and a pressure spring (13), the pressure spring (13) being supported at the other end on a support on a base (4) of the locking portion, the support being formed preferably by a collar (25) on a safety bolt (16) on the locking portion (2).

3. A security locking mechanism according to claim 1 or 2,
characterised in that the closing portion (12) is held between the base (4) of the casing (1) and the stopping catches (7).

4. A security locking mechanism according to one of claims 1 to 3,
characterised in that the bearing face (14) of the casing (1) is formed by an internal groove (15) made in the casing wall, the groove height of which groove is greater than or equal to the thickness of the stopping catches (7).

5. A security locking mechanism according to one of claims 1 to 4,
characterised in that click-stop depressions (17, 31) are arranged concentrically with the longitudinal axis of the pins (6) in a front face of the locking portion (2) facing the guide faces (9, 10), one stationary click-stop means (18, 32) of the facing guide face (9, 10) being able, in each instance, to engage in one of the click-stop depressions (17) in dependence on the rotary position of the stopping catches (7).

6. A security locking mechanism according to one of claims 1 to 5,
characterised in that the click-stop means (18) formed in the guide face (9, 10) comprise a protuberance which is triangular in longitudinal section, and the respective click-stop depressions (17) have a cross-sectional shape adapted thereto.

7. A security locking mechanism according to one of claims 1 to 6,
characterised in that the click-stop means comprise balls (32) which are spring-loaded in the guide face (9, 10) and which engage in corresponding spherical click-stop depressions (31) in the facing front face.

8. A security locking mechanism according to one of claims 1 to 7,
characterised in that there is secured centrally in the locking portion (2) the safety bolt (16), which extends through the locking portion (2) and through a slot (5) in the base (4) of the casing (1) and projects from the slot (5) when the locking portion (2) is in the safety position.

9. A security locking mechanism according to one of claims 1 to 8,
characterised in that a peripheral seal (19) is arranged inside the interior wall of the casing (1) in such a way that in every sliding position of the locking portion (2) the peripheral sealing thereof is guaranteed.

10. A security locking mechanism according to one of claims 1 to 9,
characterised in that inside the interior wall of the casing (1) there is arranged a stop pin (19) which can be inserted, in particular pressed, into a radial bore (20) and which engages in an axial recess (27) of the locking portion (2).

11. A security locking mechanism according to one of claims 1 to 10,
characterised in that the casing (1), the locking portion (2) and the pins (6) are made from high-strength materials, in particular steel.

## Revendications

1. Système de fermeture de sécurité comprenant un manchon (1) et un élément de fermeture (2) qui peut être inséré dans le manchon et relié à celui-ci, l'élément de fermeture comportant au moins une came de verrouillage (7) qui peut être tournée au moyen d'une pièce de manoeuvre (8) insérable dans l'élément de fermeture, cette came s'engageant, dans sa position de fermeture, derrière une surface d'application (14) du manchon (1),
caractérisé en ce que, à l'intérieur de l'élément de fermeture (2), parallèlement à l'axe longitudinal (X-X) de celui-ci, s'étendent au moins deux tiges (6) montées rotatives et décalées entre elles, ayant chacune une région d'extrémité située dans le manchon (1), sur laquelle est formée une came de verrouillage (7) respective, l'extrémité supérieure des tiges (6), accessible depuis l'extérieur dans l'élément de fermeture (2), comportant une pièce rapportée de manoeuvre (8), les cames de verrouillage (7) étant guidées entre deux surfaces de guidage (9, 10) à l'intérieur de l'élément de fermeture (2), l'élément de fermeture (2) étant formé en deux portions, à savoir une portion de guidage (11) des tiges (6), et une portion terminale (12), chacune des deux portions (11, 12) présentant respectivement l'une des surfaces de guidage (9, 10), et la face en regard de la surface de guidage (10) de la portion terminale (12) étant soumise à l'action d'un ressort de pression (26, 30), les cames de verrouillage (7) présentant un contour de polygone irrégulier à faces en arc de cercle, dont les dimensions sont choisies de manière à ce que, dans une seule section de position angulaire des cames de verrouillage (7), celles-ci s'insèrent derrière la face d'application (14) du manchon (1), et que, dans les autres sections de position angulaire, les cames de verrouillage (7) soient alignées avec la périphérie de l'élément de fermeture (2) ou situées à l'intérieur dudit élément de fermeture (2).

2. Système de fermeture de sécurité selon la revendication 1,
caractérisé en ce que la portion terminale (12) est maintenue entre les cames de verrouillage (7) et un ressort de pression (13), l'autre extrémité du ressort de pression (13) s'appuyant sur une butée prévue sur la base (4) de l'élément de fermeture, ladite butée étant de préférence formée par une collerette annulaire (25) formée sur un boulon de sécurité (16) de l'élément de fermeture (2).

3. Système de fermeture de sécurité selon la revendication 1 ou 2,
caractérisé en ce que la portion terminale (12) est maintenue entre la base (4) du manchon (1) et les cames de verrouillage (7).

4. Système de fermeture de sécurité selon l'une des revendications 1 à 3,
caractérisé en ce que la surface d'application (14) du manchon (1) est formée par une rainure interne (15) agencée dans la paroi du manchon, la profondeur de cette rainure étant supérieure/égale à l'épaisseur des cames de verrouillage (7).

5. Système de fermeture de sécurité selon l'une des revendications 1 à 4,
caractérisé en ce que des évidements d'arrêt (17, 31) sont disposés concentriquement à l'axe longitudinal des tiges (6), dans une surface de l'élément de fermeture (2) qui est regard de l'une des surfaces de guidage (9, 10), un moyen d'arrêt fixe (18, 32) de la face de guidage en regard (9, 10) pouvant respectivement s'insérer dans l'un des évidements d'arrêt (17), en fonction de la position de rotation des cames de verrouillage (7).

6. Système de fermeture de sécurité selon l'une des revendications 1 à 5,
caractérisé en ce que les moyens d'arrêt (18) formés dans la surface de guidage (9, 10) sont constitués par une bosse de section longitudinale triangulaire, et en ce que les évidements d'arrêt associés (17) présentent une forme de section transversale adaptée.

7. Système de fermeture de sécurité selon l'une des revendications 1 à 6,
caractérisé en ce que les moyens d'arrêt sont des billes (32), soumises dans la surface de guidage (9, 10) à l'action d'un ressort, et qui s'insèrent dans des évidements d'arrêt (31) en forme de calottes sphériques de la surface frontale en regard.

8. Système de fermeture de sécurité selon l'une des revendications 1 à 7,
caractérisé en ce qu'un boulon de sécurité (16) est fixé centralement dans l'élément de fermeture (2), ce boulon s'étendant à travers l'élément de fermeture (2) et une ouverture de passage (5) de la base (4) du manchon (1), et faisant saillie de l'ouverture de passage (5) lorsque l'élément de fermeture (2) est en position de sécurité.

9. Système de fermeture de sécurité selon l'une des revendications 1 à 8,
caractérisé en ce qu'un joint périphérique (19) est agencé dans la paroi interne du manchon (1) de manière à ce que l'étanchéité périphérique de l'élément de fermeture (2) soit assurée dans chacune de ses positions de déplacement.

10. Système de fermeture de sécurité selon l'une des revendications 1 à 9,
caractérisé en ce qu'un boulon de butée (19) est disposé dans la paroi interne du manchon (1), ce boulon pouvant être introduit, en particulier par pression, dans un alésage radial (20), et s'engageant dans un évidement axial (27) de l'élément de fermeture (2).

11. Système de fermeture de sécurité selon l'une des revendications 1 à 10,
caractérisé en ce que le manchon (1), l'élément de fermeture (2), et les chevilles (6) sont réalisés en des matières à haute résistance, en particulier en acier.
